Europäisches Patentamt

(19) European Patent Office

Office européen des brevets

(11) Publication number: **0 086 562**
A1

# (12) EUROPEAN PATENT APPLICATION

(21) Application number: **83300216.5**

(22) Date of filing: **17.01.83**

(51) Int. Cl.³: **A 01 G 31/00**

(30) Priority: **19.01.82 GB 8201408**

(71) Applicant: **NUTRIENT FILM TECHNOLOGY LIMITED, Hook Lane Aldingbourne, Chichester West Sussex (GB)**

(43) Date of publication of application: **24.08.83 Bulletin 83/34**

(72) Inventor: **Edwards, Cyril Kenneth, 6 Stoughton Close, Oadby Leicestershire (GB)**

(84) Designated Contracting States: **AT BE CH DE FR IT LI LU NL SE**

(74) Representative: **Hildyard, Edward Martin et al, Frank B. Dehn & Co. 39 Old Steine, Brighton BN1 1NH (GB)**

(54) Process and means for hydroponic cultivation.

(57) A method of cultivating a plant (1) hydroponically wherein the root system (12) is induced to develop in the form of two or more separate portions and wherein each portion (12) is supplied with one or more separate nutrient solutions. For example, the plant may be grown in a hydroponic gully (4) having separate channels (7, 8) for the supply of the nutrient solutions. The resulting plant (1) has an enhanced degree of cross-linkage in its vascular tissues.

A novel propagation pocket (2) of hydrophilic absorbent sheet material is also described, suitable for locating a plant (1) on a dividing wall (3) between said channels (7, 8).

0086562

5PB2-389A

## "Process and means for hydroponic cultivation"

The present invention relates to improvements in plant cultivation. More particularly it relates to an improved type of plant and to improved methods of growing plants hydroponically.

The traditional hydroponic methods of growing plants suffer from a number of limitations. The "nutrient film technique" described in British Patent Specification No. 1,245,581 (Allen John Cooper) represents a significant advance in the practice of hydroponics, and enables commercial growers to obtain results which are a marked improvement on those obtainable from soil-based techniques. However all existing hydroponic methods suffer from a number of disadvantages, of which the principal ones are as follows.

A major problem is inadequate gaseous exchange by the root. This problem derives from the fact, which has emerged from our recent research, that the gaseous inputs and outputs of the root system and the liquid inputs and outputs, whilst both being absolutely essential for healthy growth, have modes of operation which conflict with each other. The rates of diffusion of the main gases concerned - oxygen in, ethylene and carbon dioxide out - are approximately 10,000 times faster in air than in water, so if the roots are bathed in an aqueous nutrient solution to facilitate the input of water and salts and the output of surplus liquid metabolites, the free flow of these gaseous compounds is greatly reduced.

The early researchers in hydroponics found by practical experience that it was necessary periodically to lower the solution level in the growing tanks to allow the plants partially to dry out. More recently the British Glasshouse Crops Research Institute in their work on nutrient film cultivation have concentrated on interrupted flow techniques whereby they switch off the pumps periodically and allow the channels to drain. Both these approaches have some merit, but they suffer from the fact that they operate on the whole root simultaneously. It is easy to see that this, apart from being a risky practice, is not efficient in that (a) if the plant is bare-rooted the whole root dries out at the same time, the plant loses all its liquid inputs and hence quickly loses turgor, and the draining cycle may have to be curtailed before the gaseous exchanges are completed; and (b) if the root is growing, as is common, in a substantial volume of rooting medium, that part of the root system which lies outside the medium will dry out more quickly than that within the medium and the draining cycle will often have to be curtailed before the root system within the medium has reached the stage where it can have adequate gaseous exchange. This is particularly serious when the root tips themselves fail to drain owing to the presence of rooting medium or to an excessive depth of liquid caused by a partial blockage of the gully by the roots or rooting medium. The root tips are regions of high metabolic activity and hence require large amounts of oxygen and generate large amount of ethylene. If gaseous exchange at the root tips is impeded by continuous immersion, the whole plant will suffer.

A second problem is that existing hydroponic systems fail to take into account that the uptake zone within the root system for certain ions is substantially confined to localised areas. For instance micro-nutrients are taken up almost exclusively near the root tips, whereas macro-nutrients can be absorbed in the more mature parts of the roots. It is well-known that some of the essential inputs affect the efficiency of uptake of other inputs, in particular high levels of macro-nutrients in the bathing solution can have an inhibiting effect on the uptake of the micro-nutrients when both are supplied, as is the common practice, in the same nutrient solution.

Thus mineral deficiencies can occur even though the minerals are present in the bathing solution in adequate concentration.

A third problem is that evolution has equipped plants to function effectively only when their root system is subject to a temperature cycle. Under natural conditions the upper root is relatively warmer during the day and early evening while the lower root is relatively warmer during the night and early morning. This temperature cycle plays an important part in the uptake of nutrients, and yet no existing hydroponic system makes any attempt to achieve it.

A fourth problem is fundamental to all existing hydroponic methods. This is the limitation imposed upon the plant by its translocation system. When the solar inputs are high, the growth rate is quickly limited by the inability of the plant to transport photosynthates and nutrients to where they are needed. The differentiation of the cells forming the translocation system develops only slowly, and even then only to meet the current requirements of the plants. Nature does not equip the plant to anticipate future needs, and hence it cannot very effectively utilise variable radiation inputs. If plants grown under sub-optimal radiation conditions could be persuaded to develop translocation systems capable of handling the flow rates appropriate to high radiation conditions, they would be better placed to respond to increases in radiation as and when they occurred.

A fifth problem with existing hydroponic systems is that the provision of all the essential salts in the same nutrient solution is inherently expensive: firstly, the iron has to be chelated to prevent precipitation and this adds significantly to its cost; and secondly, the calcium and phosphorus react to form insoluble calcium phosphate which builds up inside the supply pipework causing serious blockages.

0086562

A sixth problem is that the acidity or alkalinity of nutrient solutions has a profound influence on the relative absorption of anions and cations. For optimum uptake, elements such as nitrogen, potassium and phosphorus need a pH of around 7 whilst elements such as iron, manganese and boron are readily absorbed only at a lower pH, e.g. 5 to 6. When a single solution is used to present all the salts to the root system its pH has to be maintained at some compromise level at the expense of efficiency of uptake.

We have found that these problems can be overcome or mitigated by a method of cultivating a plant hydroponically wherein the root system of the plant is induced to develop in the form of two or more separate portions and wherein each portion is supplied with a separate nutrient solution. If, at an early stage in the development of the plant, nutrients are supplied unequally to the two or more portions by alternately supplying and withholding nutrients from a particular portion or by varying the pH levels of the separate solutions or by differential heat input or the like, then the plant will develop a multiple translocation system. In particular the various xylem elements will develop mutliple cross-linkages and the specialised parenchyma cells of both the xylem and phloem, normally known as transfer cells, will develop extended plasma membranes with an abundance of mitochondria. Thus the pattern of cell differentiation within the plant will be physically different from that of a natural plant, providing a markedly enhanced capacity for transfer of both solutes and assimilates.

The division of the root system into portions can be vertical, horizontal or both. By a vertical division we mean that the root system as a whole is divided into two or more branches, each containing upper and lower root portions. By horizontal division we mean a division between the upper and lower root portions. Both methods of division can be applied simultaneously so that a root system which is already divided vertically can have each portion divided horizontally.

In a plant growing naturally each part of the root system is connected to a particular meristem and consequently supplies only a particular portion of the upper plant. Thus if part of the root system is damaged or starved, the corresponding portion of the upper plant suffers while the rest of the plant grows normally. It is not possible for the undamaged portion of the root system to feed the whole plant effectively since there is normally inadequate lateral communication between the different vascular bundles in the xylem. Such is the improvement in the lateral transfer of salts when the plant is grown according to this invention that when any portion of the root is drained of nutrient solution the other portion or portions can effectively feed the whole plant. Furthermore, the plant is able to translocate nutrients and photosynthates more effectively than a conventional plant, and hence its potential maximum growth rate is higher.

The improvements induced by differential nutrition will be retained even when the plant is removed from the specialised environment which caused it. Furthermore, these improvements are by no means confined to hydroponic cultivation. The plant can be established in soil and is particularly easy to establish under poor conditions, e.g. in arid or poor soil. Under these conditions, one portion of the root system may be planted normally and the other portion (or one of the other portions) may be confined in some way so that it can be supplied preferentially with extra nutrients. The extra nutrients so supplied can be utilised by the whole plant including the other portion of root system which accordingly will develop and remain nourished while providing anchorage. Eventually the extra nutrients can be withdrawn and the remaining root system can take over support of the plant. This technique would be impossible with a normal plant since the portion of root not being fed, and the corresponding portions of the upper plant, would die before becoming established. The technique is expected to be very useful for the establishment, for example, of trees in semi-desert areas, where irrigation and feeding of the entire root system is not practicable.

When the plant is to be transplanted into a solid growing medium, the two or more root portions may be allowed to intermingle, but it will be understood that the portions still exist as structural entities in the plant. Such a plant still embodies our invention even though the root portions are no longer physically separate.

Once a plant has developed a divided root system, differential nutrition can be applied in a number of ways. The separate nutrient solutions may have the same or different compositions. They may be supplied continuously or intermittently. They may have different pH levels, different salt concentrations, or be at different temperatures. The level to which the root system is immersed may be varied to bring particular solutions into contact with different parts of the root system. By such means it is possible to ensure a highly efficient pattern of inputs and outputs.

Our invention may be put into effect in various ways. The primary requirement is to induce the root system to divide into two or more portions and to provide separate nutrient solutions for the said portions. Thus in a static system, two or more storage vessels for the nutrient solutions may be utilised, and the plant may be supported on a dividing wall between the vessels, with or without the presence of rooting medium.

In a recirculating system, the conventional nutrient gully or channel is replaced by a number of channels each carrying a nutrient solution. Selected portions of the root system can be presented to one or more of the channels in such a way that the plant as a whole receives its complete requirement of root inputs, the individual inputs being presented to the parts of the root structure where they can be efficiently absorbed.

The dual or multiple channels required can be conveniently constructed by providing one or more dividing walls projecting upwardly from the base of a conventional gully, to maintain the separation of the nutrient solutions. Conveniently one or more dividing walls running parallel with the sides of the gully and thereby dividing the gully into two or more channels can support the stem of the plant, with portions of the root system in each of the channels.

The dividing walls should be impervious to the nutrient solution and should have a height adequate to maintain the separation of the various solutions although they may allow roots to pass over them from one channel to another.

Although a rooting medium is not essential, an inert rooting medium can if desired be provided on the dividing wall or walls to support the individual roots and to assist their development above the surface of the nutrient solution. Only a thin layer of rooting medium is required to assist early root establishment and this has no tendency to block the flow of solution down the channels. Moreover the rooting medium can be placed high enough to avoid an excessive uptake of nutrient solution by capillarity, leading to high concentrations of salts around the base of the stem and consequentially to "collar burn". Collar burn is a problem with conventional hydroponic systems. It is usually avoided by providing a sufficient depth of rooting medium so that the top surface is not wetted by capillarity. However the large block of rooting medium thereby required is uneconomic and tends to obstruct the flow of nutrient solution.

We have found that absorbent sheet material such as capillary matting can be used to provide a particularly simple and efficient propagation pocket for supporting a plant on the dividing wall. Thus according to our invention means for growing and supporting a plant during hydroponic cultivation comprises a pocket of hydrophilic absorbent sheet material, said pocket being open at its upper edge and having two or more dependent portions of said material for conveying nutrient solutions to a seed or other plant reproductive material placed in said pocket.

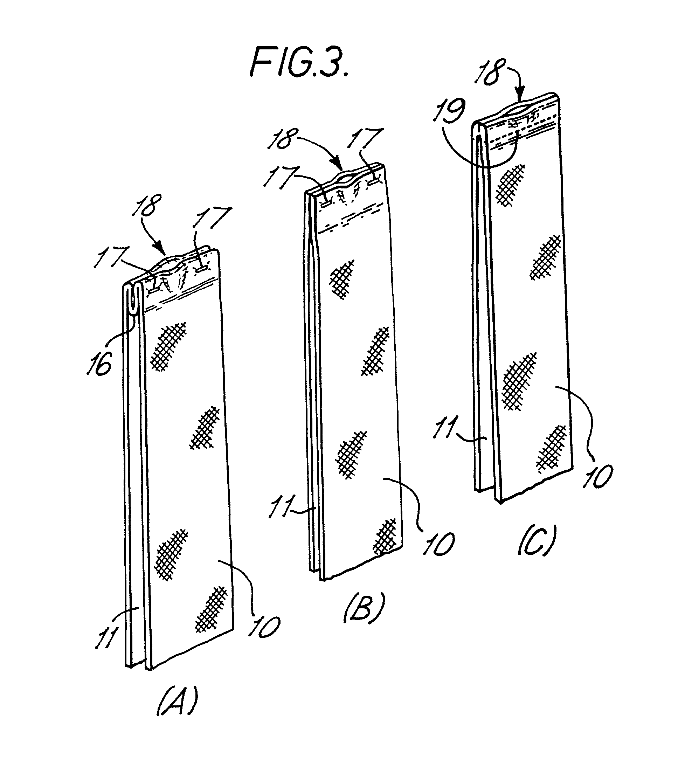

The pocket is preferably formed by a pleat in a sheet of said material, as illustrated in Figure 3 described hereinafter. The pleat may be retained by stitching, staples, adhesive, heat-welding or other suitable attachment means. Alternatively a sheet of folded material may be slit along a portion of the fold and the slit portion formed into a pocket by stitching, staples, adhesive, heat welding or other suitable means, or an equivalent device may be fashioned from two or more separate pieces of sheet material suitably attached together. It is sometimes practicable, particularly in the case of large seeds, to leave the bottom of the pocket open.

The seed, germinating in the pocket, develops a root system extending into each of the two or more dependent portions of sheet material, which portions depend into adjacent channels or static containers for the nutrient solutions. The sheet material thus supports the plant securely from the earliest stage of development. Moreover it provides sufficient resistance to the emerging shoot to ensure that the remnants of seed husk are separated from the cotyledons, thus overcoming a problem well-known to nurserymen

- 9 -  0086562

whereby the tips of the cotyledons are trapped inside the desiccated husk.

The sheet material is preferably the material known as capillary matting, as used for covering glasshouse benches and the like. This is a non-woven cellulosic fabric. Any other suitable type of woven or non-woven fabric, felt or open-celled foam material may be used, provided it permits the roots to develop freely and has adequate capillarity to maintain the nutrition of the seedling.

One type of gully which can be readily modified for use in accordance with our invention is that described and claimed in our British Patent Specification 2,074,001A. In this construction the gully is formed of flexible sheet material shaped to form a base and side members, the side members being longitudinally rolled, creased or folded into a tubular or part-tubular configuration. This gully can be modified by draping it over a longitudinally extending and centrally disposed dividing member, thus causing the sheet material to be formed into two channels. Obviously further channels could be produced in the same way if desired. In this embodiment the tubular or part-tubular portion may contain water, external to the channel, said water bring in contact with hydrophilic absorbent sheet material, such as capillary matting, which is draped over or adjacent to the gully, whereby the gully is cooled by evaporation of said water. In warm climates such cooling is beneficial to root function, and the humidifying effect on the atmosphere may also be beneficial. Moreover if the sheet material is selected to have the requisite mechanical properties, the central dividing wall will be stable without a permanent internal support. Indeed the central wall adds to the stiffness of the gully and enables it to span considerable distances without intermediate supports. Conversely the central wall may be hollow and may contain heating means, e.g a pipe carrying warmed water. Thus root metabolism may be maintained even when the air temperature is low.

The gully may instead be formed, e.g. by extrusion, in an inert impermeable material such as a suitable plastics material and the nutrient solutions may then flow directly in the channels so formed. Plastics sheet material, e.g. black polyethylene, rolled into a tubular or part-tubular configuration is preferably provided overlaying said channels on either side of the dividing wall to exclude light from the roots, provide heat insulation, and support the stems of the plants. Such sheet material may be attached to the outer edges of the gulley by clips or other suitable means.

A plant having a multiple or divided root system is thought to be wholly novel and such a plant forms an important aspect of our invention. The plant may be defined as having a root system divided into two or more portions and characterised in that the pattern of cell differentiation of the vascular tissues connecting said portions to the upper plant has been so modified by cross-linkages within and between the tissues that when any one portion of the root system is at any time drained of nutrient solution the remaining portion or portions can supply adequate quantities of all essential root inputs to the whole plant. Such a plant is improved in several respects relative to a normal plant, for instance:-

a)     the enhanced cross-linking of the vascular tissues allows one or more portions of the root system to be subjected to an aeration phase whilst the remainder of the root system is immersed in one or more nutrient solutions and is providing all essential root inputs to the whole plant. Consequently when the demands of the upper plant are exceptionally high, the whole of the root system can mobilised by varying the immersion and aeration cycle to give the optimal mix of inputs required;

0086562

b)      it can be transplanted at a relatively mature stage of growth because the various portions of the root system can be grown in and around sheets of hydrophilic absorbent material which, in turn, are supported on one or more stable dividing walls. Consequently the whole plant can be moved without undue disturbance or damage to the root system.

The method of cultivating plants wherein the root system of the plant is induced to develop in the form of two or more portions and each portion is supplied with a separate nutrient solution is also thought to be wholly novel and such a method forms a further important aspect of our invention. It is improved in several respects relative to a conventional process, for instance:-

a)      the growth of the plant is not inhibited by inadequate gaseous exchange by the root.  By periodically draining the solution from each portion of the root in turn and providing an adequate period of aeration, all necessary gaseous exchanges can be completed before that portion of the root is re-immersed, and whilst this is taking place the whole of the upper plant can be adequately supplied by the other portions of the root;

b)      roots can be arranged to pass from one storage vessel to another so that different parts of the same root are exposed to the inputs appropriate to that part.  Alternatively if the surface of the dividing wall or walls is covered by an inert rooting medium (or provided in any way with a surface that will support roots), the root system will be free to develop at all levels along the surface.  If then different nutrient solutions are supplied to immerse the root system to pre-determined levels, each part of the root can be exposed to the particular inputs needed;

c)      temperature differentials within the root system can be obtained by providing the separate nutrient solutions at different temperatures and by using the divide as a means of indirectly heating or cooling the upper root;

d)    the cost of nutrient salts can be minimised by segregating into separate solutions those chemicals which are incompatible or which inhibit each other's uptake.  Furthermore, if water of adequate purity is scarce and hence expensive, low quality water can be used to provide the major part of the plant's needs by keeping it separate from the nutrient solutions containing the more expensive salts and applying it in turn to each portion of the root system, and then disposing of it before its impurity levels cause damage to the plant;

e)    once the nutrients are segregated into separate solutions they can easily be presented to the roots at pH levels conductive to maximum uptake of the ions concerned.

Our invention is illustrated diagrammatically by way of example only with reference to the accompanying drawings, wherein:-

Fig. 1 is an idealised perspective view, partly cut away, of plants growing in propagation pockets over the dividing wall of a gully having two channels;

Fig. 2 is an enlarged part-sectional view of a plant located as shown in Fig. 1;

Figs 3A, 3B and 3C are perspective views of three different propagation pockets in accordance with our invention;

Fig. 4 is a perspective view, partly in section, of a modification of Fig. 2 whereby both horizontal and vertical development of the root structure is encouraged;

Fig. 5 is a further modification of Fig. 2 showing means for heating and/or cooling the gully;

Fig. 6 is a perspective view of a static system for practising our invention; and

Fig. 7 is an enlarged view of the inset portion of Fig. 6.

0086562

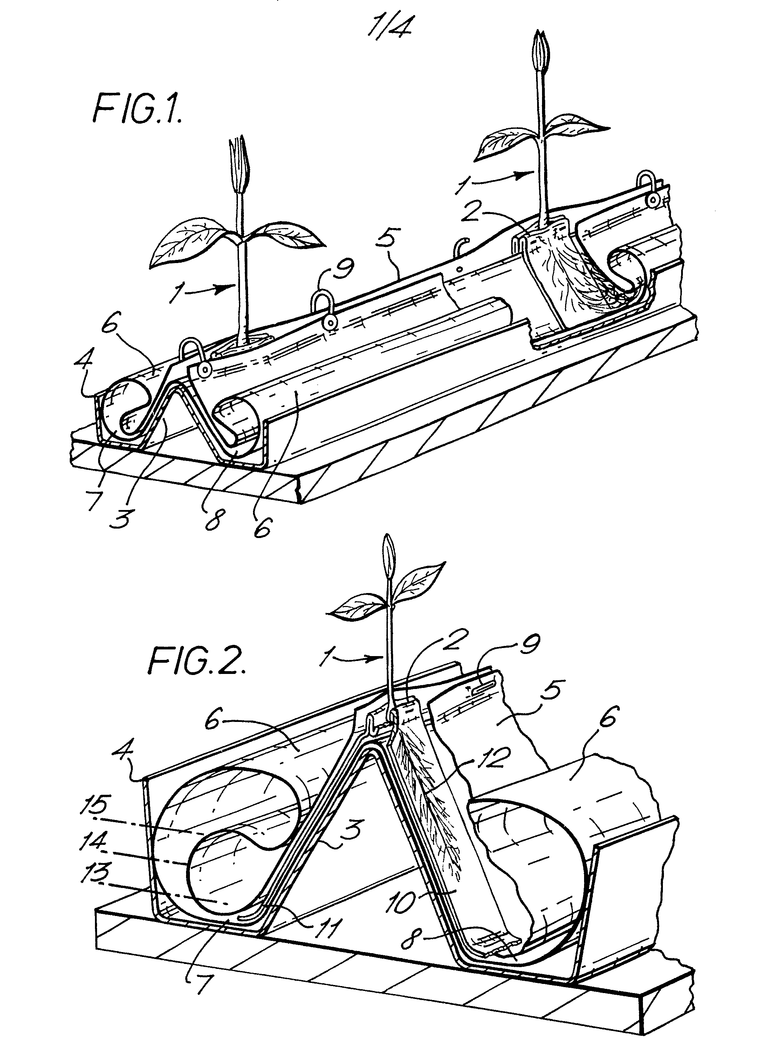

Referring now to Fig. 1, the plants 1 are shown growing in propagation pockets 2 which straddle the dividing wall 3 of a gully 4, which may be an extrusion in rigid PVC, aluminium or like material. Flexible sheet material 5, e.g. pigmented polyethylene, is folded and rolled to form part-tubular side members 6 and two channels 7 and 8 down which nutrient solutions are supplied. The free edges of the sheet material 5 give support to the plant stems and are attached at spaced intervals by clips 9.

Referring now to Fig 2, the propagation pocket 2 has two dependent portions 10,11 dipping respectively into channels 8,9. Each portion 10,11 supports and nourishes a separate portion of root system, of which portion 12 is visible. The portion 12 may be supplied with root inputs via channel 8 independently of the root portion supplied via channel 7. Moreover the levels of nutrient solution in the channels 7,8 may be varied from time to time, e.g. to the depths shown at 13,14 and 15. Level 13 will mainly supply nutrients to the root tips, while levels 14 and 15 will involve increasing proportions of the mature root.

Referring now to Fig. 3, the propagation pocket (A) comprises a single length of capillary matting having a central pleat 16 retained by staples 17. The pocket portion 18 is available to receive a seed (not shown).

In Fig. 3(B) the pocket is fashioned from two pieces of capillary matting attached by staples 17.

In Fig. 3(C) a single piece of capillary matting has been folded and the central portion of the fold cut to form the seed pocket 18. The fold is retained by stiching 19.

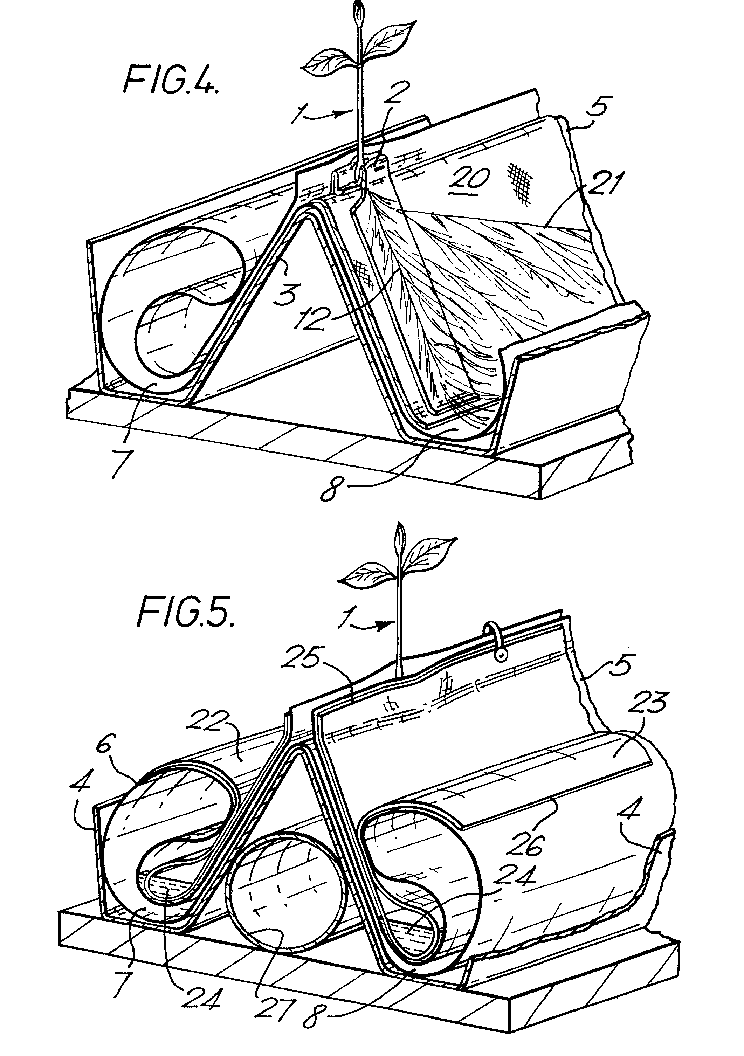

Fig. 4 is a modification of Fig. 2 wherein the dividing wall 3 has been covered with a layer of capillary matting 20 prior to placing the propagation pocket 2 in position. As a result the root system can develop lateral branches 21 on both sides of the dividing wall, as well as the main vertical root 12. The lateral branches can be selectively supplied with inputs by altering the level of the solutions in the channels 7,8.

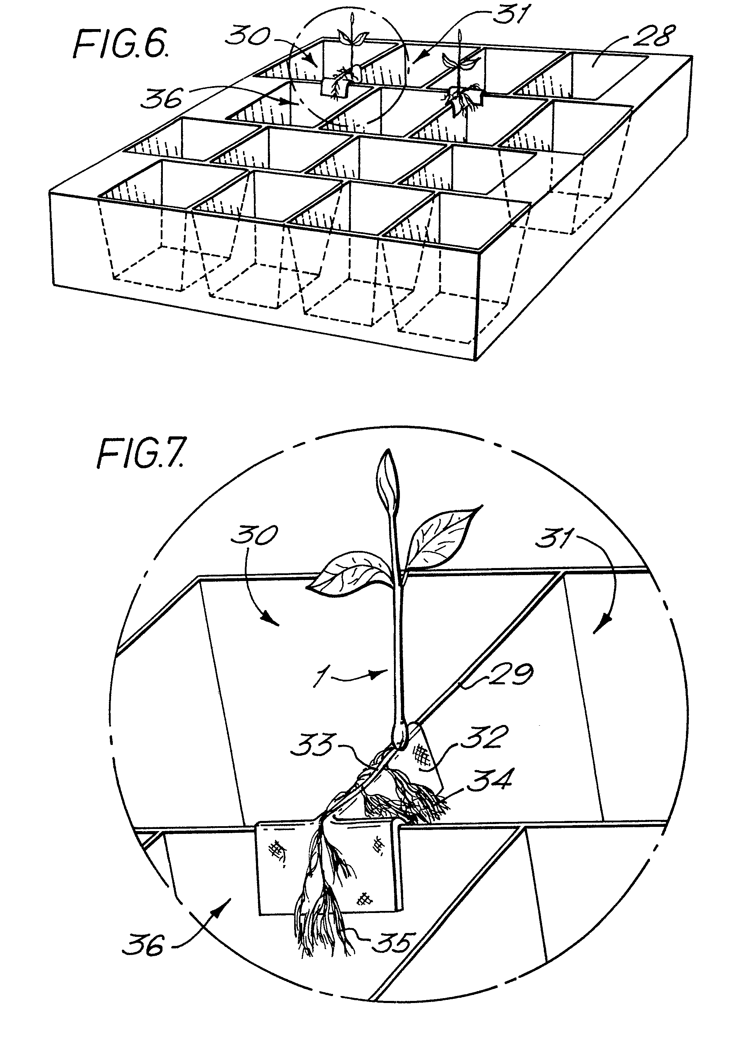

In Fig. 5 the apparatus of Fig. 2 has been modified by providing capillary matting 22,23 which dips into water channels 24 contained within the rolled side members 6. The matting is looped into the channels 24 and the free edges terminate respectively at 25, adjacent the free edges of the plastics sheet 5, and at 26, in the vicinity of upper edge of gully 4. Thus the whole gully is cooled by evaporation. The water in channels 24 is not in contact with the plants and can be of poor quality, or even seawater.

A pipe 27 is located within the dividing wall and may be supplied with or warm or cold water as desired. Thus the upper root portions may be selectively warmed by feeding warm water through pipe 27, and the lower root portions may be warmed by supplying heated nutrient solution to channels 7 and 8. It is thereby possible to mimic the natural diurnal temperature differentials which plants have been equipped by evolution to utilise.

The embodiment of Fig. 6 is a static hydroponic cultivation system comprising an array of sixteen separate vessels 28 in four rows, the rows being staggered such that the internal dividing walls terminate at the junction of three different vessels. The array may be conveniently made out of vacuum-formed plastics material, e.g. rigid PVC. By way of illustration, two plants are shown in position, one being illustrated in enlarged inset view in Fig. 7.

Referring now to Fig. 7, the plant 1 is supported on the dividing wall 29 between vessels 30 and 31. The plant is anchored in rooting medium 32. The tap root 33 divides into laterals 34, some of which are trained to hang down into vessel 30 and some into vessel 31. These vessels contain suitable nutrient solutions for nourishing the upper root.

The lower root 35 hangs down into a third vesel 36 containing a solution adapted to be taken up by the root tip.

By way of example, the vessels 30 and 31 may contain the following solutions, either separately and alternately or in admixture (although mixtures of solutions (A) and (B) are liable to precipitate calcium phosphate unless well diluted);

| | | |
|---|---|---|
| (A) | Calcium nitrate (tetrahydrate) | 1000g |
| | Potassium nitrate | 538g |
| | Water to | 500 litre |
| (B) | Potassium dihydrogen phosphate | 263g |
| | Magnesium sulphate (heptahydrate) | 513g |
| | Water to | 500 litre |

Vessel 36 contains solution (C):

| | | |
|---|---|---|
| (C) | Manganese sulphate (monohydrate) | 6.1g |
| | Ferrous sulphate (heptahydrate) | 60g |
| | Boric acid | 1.7g |
| | Copper sulphate (pentahydrate) | 0.39g |
| | Ammonium molybdate (tetrahydrate) | 0.37g |
| | Zinc sulphate (heptahydrate) | 0.44g |
| | Water to | 1000 litre |

- 16 -

0086562

Claims:

1.   A method of cultivating a plant hydroponically wherein the root system is induced to develop in the form of two or more separate portions and wherein each portion is supplied with one or more separate nutrient solutions.

2.   The method of claim 1 wherein each of said portions is periodically drained or partially drained of nutrient solution to facilitate gaseous exchange.

3.   The method of claim 1 or 2 wherein successive nutrient solutions supplied to any portion of the root system immerse or partially immerse said portion to different but pre-determined levels.

4.   The method of any of claims 1 to 3 wherein said separate nutrient solutions differ in chemical composition, pH and/or temperature.

5.   The method of any of the preceding claims wherein the plant is supported on a dividing wall between storage vessels containing the nutrient solutions, different portions of the root system being directed into different storage vessels.

6.   The method of any of claims 1 to 4 wherein said plant is supported on a dividing wall between two or multiple channels through which said nutrient solutions are supplied, said portions of the root system being directed into different channels.

7.   The method of claim 6 wherein said plant is located in a propagation pocket comprising a pocket of hydrophilic absorbent sheet material, said pocket being open at its upper edge and having two or more dependent portions of said material for conveying nutrient solutions to a seed or other plant reproductive material placed in said pocket.

8.   Hydroponic cultivation apparatus suitable for performing the method of claim 1, said apparatus comprising two or more containers for separate nutrient solutions and means for supporting a plant so that different portions of its root system contact said separate nutrient solutions.

9.    The apparatus of claim 8 wherein said separate nutrient solutions are contained in adjacent channels of a gully and wherein a plant may be supported on a wall or walls dividing said channels.

10.    The apparatus of claim 8 or 9 comprising means for at least partially draining said containers in turn to increase gaseous exchange of root portions contained therein.

11.    The apparatus of claim 9 or 10 wherein said gully is formed of flexible sheet material shaped to form a base and side members, the side members being longitudinally rolled, creased or folded into a tubular or part-tubular configuration, the base of said gully being divided into two or more channels by one or more upstanding loops of said sheet material.

12.    The apparatus of claim 9 or 10 wherein said gully is formed of an inert impermeable material to contain said nutrient solutions and wherein plastics sheet material rolled into a tubular or part-tubular configuration is provided overlaying said channels on either side of said dividing wall.

13.    The apparatus of claim 11 or 12 wherein said gully is arranged to be cooled by evaporation of water contained within said tubular or part-tubular portions external of said channels, said water evaporating from the surface of a hydrophilic absorbent sheet material which contacts said water.

14.    A plant grown by the process of claim 1, 2, 3 or 4, said plant having a root system divided into two or more portions and characterised in that the pattern of cell differentiation of the vascular tissues connecting said portions to the upper plant has been so modified by cross-linkages within and between the tissues that when any one portion of the root system is at any time drained of nutrient solution the remaining portion or portions can supply adequate quantities of all essential root inputs to the whole plant.

0086562

15.    A plant according to claim 14 with the various portions of the root system supported by hydrophilic absorbent material in such a way that a fully developed or partly developed plant can be successfully transplanted without serious damage to the root system.

16.    A method of establishing the plant of claim 14 under adverse conditions which comprises supplying nutrients hydroponically to one or more of said root portions until the remaining portions are established in a solid growing medium, whereafter said nutrients may be withdrawn.

17.    Means for growing and supporting a plant during hydroponic cultivation comprising a pocket of hydrophilic absorbent sheet material, said pocket being open at its upper edge and having two or more dependent portions of said material for conveying nutrient solutions to a seed or other plant reproductive material placed in said pocket.

0086562

1/4

FIG.1.

FIG.2.

2/4

0086562

FIG.3.

(A)

(B)

(C)

**FIG.4.**

**FIG.5.**

0086562

4/4

FIG.6.

FIG.7.

0086562

European Patent
Office

**EUROPEAN SEARCH REPORT**

Application number

EP 83 30 0216

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | Soviet Inventions Illustrated Week E30, 8 September 1982 Section P13 & SU-A-869702 | 1,4,8 | A 01 G   31/00 |
| A | GB-A-2 056 833   (HAGO PRODUCTS LTD.) * Page 1, line 79 - page 2, line 23; figure 1 * | 1 | |
| A | US-A-3 744 183   (N. KATO) * Column  2, line 59 - column 3, line 8; figures 1-3 * | 7,17 | |
| D,A | GB-A-2 074 001   (NUTRIENT FILM TECHNOLOGY LTD.) * Claims 1-9; figures 1-9 * | 8,11 | |
| D,A | GB-A-1 245 581   (NATIONAL RESEARCH DEVELOPMENT CORP.) | | |

TECHNICAL FIELDS
SEARCHED (Int. Cl. 3)

A 01 G   31/00

The present search report has been drawn up for all claims

| Place of search BERLIN | Date of completion of the search 31-03-1983 | Examiner SCHOFER G |
|---|---|---|